(19) Europäisches Patentamt / European Patent Office / Office européen des brevets

(11) **EP 2 467 452 B1**

(12) **FASCICULE DE BREVET EUROPEEN**

(45) Date de publication et mention
de la délivrance du brevet:
**19.10.2016 Bulletin 2016/42**

(21) Numéro de dépôt: **10762978.4**

(22) Date de dépôt: **09.08.2010**

(51) Int Cl.:
*C10G 3/00* (2006.01)    *C10G 49/22* (2006.01)
*C10G 65/04* (2006.01)    *C10G 65/12* (2006.01)
*C01B 3/34* (2006.01)    *C10B 53/02* (2006.01)
*C01B 3/38* (2006.01)    *C01B 3/48* (2006.01)

(86) Numéro de dépôt international:
**PCT/FR2010/051682**

(87) Numéro de publication internationale:
**WO 2011/020966 (24.02.2011 Gazette 2011/08)**

(54) **PROCÉDÉ DE VALORISATION D'HUILE DE PYROLYSE, NOTAMMENT EN RAFFINERIE**

VERFAHREN ZUR AUFWERTUNG EINES PYROLYSEÖLS, IM BESONDEREN IN EINER RAFFINERIE

PROCESS FOR UPGRADING A PYROLYSIS OIL, IN PARTICULAR IN A REFINERY

(84) Etats contractants désignés:
**AL AT BE BG CH CY CZ DE DK EE ES FI FR GB GR HR HU IE IS IT LI LT LU LV MC MK MT NL NO PL PT RO SE SI SK SM TR**

(30) Priorité: **21.08.2009 FR 0955739**

(43) Date de publication de la demande:
**27.06.2012 Bulletin 2012/26**

(73) Titulaire: **Total Raffinage France
92400 Courbevoie (FR)**

(72) Inventeur: **PREAU, Alexandre
92800 Puteaux (FR)**

(74) Mandataire: **Largeau, Béatrice
Fédit-Loriot
38, avenue Hoche
75008 Paris (FR)**

(56) Documents cités:
WO-A1-2007/033460    US-A- 5 180 868
US-A1- 2008 053 870    US-B1- 7 425 657

**Description**

L'invention concerne un procédé de valorisation d'huile de pyrolyse, notamment en raffinerie.

Les huiles de pyrolyse, ou bio-huiles, sont issues de la pyroliquéfaction, également appelée pyrolyse rapide à basse température, de biomasse de type bois (feuillus, résineux), de paille et résidus de biomasse forestière ou agricole tels que écorces, copeaux, sciures, bagasses...

Ces huiles sont produites par dépolymérisation et fragmentation des éléments constitutifs de la biomasse (holocelluloses (cellulose, hémicellulose), lignine) sous l'action d'une augmentation rapide (<2 secondes) de la température à 450°C-550°C et d'une trempe rapide des produits intermédiaires de dégradation.

Elles peuvent être considérées comme des microémulsions dans lesquelles la phase continue liquide est une solution aqueuse des produits de décomposition de la cellulose et de l'hémicellulose et de petites molécules de lignine. La phase liquide continue stabilise la phase discontinue organique constituée essentiellement de macromolécules de la lignine pyrolytique.

Elles sont constituées d'eau et d'un mélange complexe de composés oxygénés. Leur composition élémentaire est proche de la composition de la biomasse de départ avec en particulier une teneur importante en oxygène.

La composition moléculaire organique moyenne analysable peut être décrite par les familles présentées dans le tableau 1.

Tableau 1

|  | Teneur (%m/m) |
|---|---|
| Lignine pyrolytique | 15-25 |
| Acides organiques | 5-15 |
| Aldéhydes et hydroxy-aldéhydes | 5-20 |
| Cétones et hydroxy-cétones | 0-15 |
| Phénols | 15-35 |
| Méthanol, Ethanol | 1-5 |

Le tableau 2 suivant regroupe les principales caractéristiques des huiles de pyrolyse.

Tableau 2

| Propriétés | | Huiles de pyrolyse |
|---|---|---|
| pH | | 2,0-3,7 |
| Teneur en eau (% m/m) | | 15-35 |
| Masse volumique à 15°C (Kg/m$^3$) | | 1110-1300 |
| Viscosité à 20°C (mm$^2$/s) | | 50-130 |
| Viscosité à 40°C (mm$^2$/s) | | 12-35 |
| Analyse élémentaire (%m/m) | C | 30-50 |
| | H | 6-9 |
| | O | 40-60 |
| Matières solides () | | 0,01-2 |
| Cendre (%m/m) | | 0,01-0,20 |
| Pouvoir Calorifique Supérieur PCS (MJ/kg) | | 13-19 |
| Métaux (K+Na) (mg/kg) | | 10-300 |

Les huiles de pyrolyse se caractérisent par une masse volumique élevée et une viscosité variable en fonction, entre autres, de la biomasse de départ. Comme elles sont acides et donc corrosives, leur utilisation nécessite l'emploi de matériels spécifiques, résistants à la corrosion, tels que l'acier inoxydable, le polyéthylène haute densité, le propylène...

Par ailleurs, les huiles de pyrolyse sont instables chimiquement et thermiquement. L'instabilité chimique des huiles de pyrolyse se traduit par l'évolution dans le temps de leurs propriétés physico-chimiques (viscosité, teneur en eau, teneur en solides...) pouvant aboutir à une séparation en deux phases. L'instabilité thermique des huiles de pyrolyse se traduit par une évolution très rapide de leurs propriétés lorsqu'elles sont chauffées à des températures supérieures à 80°C. Du fait de cette instabilité, ces produits ne peuvent être valorisés en raffinerie sous leur forme brute, excepté dans un applicatif de combustion moyennant quelques modifications des installations actuelles. Pour toute autre application en raffinerie, il semble nécessaire de stabiliser les huiles de pyrolyse avant utilisation, par exemple par élimination ou transformation des espèces les plus réactives.

Les huiles de pyrolyse présentent une teneur en eau moyenne de 25% m/m, une teneur en oxygène de la fraction organique de l'ordre de 35-40% m/m et une structure moléculaire d'une grande complexité. Leur teneur en eau peut en outre conduire à une séparation partielle de phase ayant une incidence sur leurs autres propriétés physiques. Enfin, leurs teneurs en cendres et alcalins peuvent conduire à la formation de dépôts et à l'encrassement des installations.

De plus, en raison de leur nature hydrophile et de leur polarité, les huiles de pyrolyse rapide ne sont pas miscibles avec les hydrocarbures. Ainsi, les huiles de pyrolyse ne peuvent pas être valorisées en tant que telles en raffinerie en mélange avec des coupes hydrocarbonées d'origine fossile.

Ainsi, en raison de leurs propriétés particulières, l'utilisation des huiles de pyrolyse soulève de nombreux problèmes.

Actuellement les principales voies de valorisation étudiées sont la combustion de l'huile de pyrolyse dans des chaudières ou des turbines à gaz pour produire de la chaleur et/ou de l'électricité, ou la production de bases pour la chimie.

Pour pouvoir être utilisées dans des raffineries en vue de la production de carburant, les huiles de pyrolyse doivent subir un prétraitement visant à les stabiliser. Un tel prétraitement peut être une étape de désoxygénation pouvant être:

- totale, pour transformer les bio-huiles en bases carburant,
- partielle (>90%), pour rendre les huiles miscibles avec les coupes hydrocarbonées d'origine pétrolière et ainsi l'introduire dans le schéma de raffinage,
- partielle (>50%), pour stabiliser les huiles en vue d'une utilisation ultérieure.

Cette désoxygénation peut notamment être réalisée par hydrodésoxygénation (HDO), suivant la réaction simplifiée :

$$C_6H_8O_4 + 4\,H_2 \rightarrow C_6H_8 + 4\,H_2O$$

Toutefois, la quantité d'hydrogène nécessaire est élevée (de 2 à 7 % en masse par masse d'huile de pyrolyse) et a un impact important sur le coût du traitement de ces huiles de pyrolyse (environ 1/3 du prix de revient des bases carburants produites) est sur l'Analyse du cycle de vie (ACV) qui est un outil d'évaluation des impacts sur l'environnement d'un système, ici le biocarburant, incluant l'ensemble des activités depuis l'extraction des matières premières jusqu'à la gestion de la fin de fin des déchets. Ainsi, en ce qui concerne le biocarburant produit à partir de l'huile de pyrolyse, on estime que 2/3 des émissions fossiles totales sont dues à la production de l'hydrogène nécessaire à l'hydrodésoxygénation de l'huile de pyrolyse. Or, une consommation trop importante en hydrogène lors de l'HDO peut être rédhibitoire pour considérer les bases carburant produites comme biocarburant suivant les critères de durabilité établis par les directives européennes, telles que la directive 2009/28/CE, qui spécifié qu'à partir de 2013, la réduction des émissions de gaz à effet de serre résultant de l'utilisation de biocarburants doit être d'au moins 35 % par rapport aux carburants fossiles. Cette réduction devra être d'au moins 50% à partir de 2017. Il existe donc un grand besoin de réduire l'impact de la consommation d'hydrogène lors du traitement des huiles de pyrolyse en vue de la production de carburant.

Une solution pourrait consister en l'utilisation des huiles de pyrolyse elles-mêmes pour produire de l'hydrogène, par exemple par vaporéformage catalytique. US 2008/0053870 décrit un procédé de valorisation d'huile de pyrolyse.

Des études ont montré que le vaporéformage catalytique d'huile ou de fractions d'huile de pyrolyse mené dans des conditions opératoires proches de celles utilisées pour produire de l'hydrogène à partir de méthane, conduit à une formation de coke, entrainant une désactivation rapide du catalyseur.

Le vaporéformage en lit fixe a notamment été étudié (Czernik S, French R, Feik C, Chornet E. Hydrogen by catalytic steam reforming of liquid by-products from biomass thermoconversion processes. Ind Eng Chem Res. 2002 (41) 4209-4215) sur une fraction dite « aqueuse » des huiles de pyrolyse. Ladite fraction a été obtenue en ajoutant de l'eau pour forcer une séparation de phase avec la fraction lignine pyrolytique. Le dépôt de coke entraîne toutefois une désactivation rapide du catalyseur limitant le temps de l'essai à une durée (4 heures) inférieure au temps nécessaire à la régénération du catalyseur (6 à 8 heures), mettant en évidence les limitations du lit fixe pour ce type de réactions. Ces phénomènes sont encore plus marqués en utilisant l'huile totale comme charge de vaporéformage : dans les mêmes conditions opératoires, la durée maximale d'un essai atteint 45 minutes alors que le temps de régénération du catalyseur est de 8 heures.

A la suite de ces travaux, des tests en lit fluidisé ont été réalisés par les mêmes auteurs. L'inconvénient du lit fluidisé est de devoir utiliser des catalyseurs résistants aux phénomènes d'attrition. Les performances des catalyseurs usuels sont insuffisantes et des recherches doivent être menées sur ce sujet.

Avec les mêmes conditions opératoires qu'en lit fixe (850°C, S/C >5, GC1HSV de 800 à 1000 h-1) et la même charge (fraction « aqueuse » obtenue par séparation de phase après ajout d'eau à l'huile de pyrolyse), la durée d'essai en continu est de plus de 100 heures.

Il apparaît ainsi que le vaporéformage de la fraction aqueuse d'huile de pyrolyse est techniquement réalisable en lit fluidité et permet de réduire la formation de coke. Cependant, l'attrition des catalyseurs engendrée par un fonctionnement en lit fluidisé nécessite le développement de nouveaux catalyseurs et de réacteurs dédiés à ce type de traitement. De plus, la fraction organique de l'huile de pyrolyse n'est pas valorisable en vaporéformage car celle-ci contient des composés trop lourds pour ce type de réactions et nécessite un autre prétraitement pour pouvoir être valorisable en raffinerie car cette fraction n'est pas miscible avec des hydrocarbures.

La production d'hydrogène à partir d'huile de pyrolyse par un procédé de vaporéformage n'est donc envisageable que sur la fraction aqueuse de l'huile et ne permet pas une valorisation de la totalité de l'huile. Ladite fraction aqueuse pouvant encore contenir des composés précurseurs de coke suivant le type de séparation utilisé pour fractionner l'huile, la réaction de vaporéformage reste difficile à mettre en oeuvre.

L'invention vise à pallier à ces inconvénients en proposant un procédé de valorisation d'huiles de pyrolyse permettant de produire de l'hydrogène en valorisant la totalité des huiles de pyrolyse traitées.

A cet effet, l'objet de l'invention concerne un procédé de valorisation d'huile de pyrolyse selon la revendication 1 comprenant les étapes suivantes :

- pré-réformage de la fraction aqueuse légère,
  soit issue de la séparation de l'huile de pyrolyse en une fraction aqueuse et une fraction riche en lignine,
  soit obtenue après un traitement d'hydrodésoxygénation de l'huile de pyrolyse puis séparation de l'effluent obtenu en une fraction aqueuse légère et une fraction organique lourde,
- traitement de ladite fraction aqueuse pré-réformée dans une unité SMR afin de produire de l'hydrogène ;
- hydrotraitement et/ou craquage catalytique et/ou viscoréduction de ladite fraction riche en lignine ou de la fraction organique lourde.

L'invention concerne plus particulièrement un procédé de valorisation d'huile de pyrolyse comprenant les étapes suivantes :

- traitement d'hydrodésoxygénation de l'huile de pyrolyse et séparation de l'effluent obtenu en une fraction aqueuse légère et une fraction organique lourde,
- pré-réformage de ladite fraction aqueuse légère et traitement de l'effluent obtenu dans une unité SMR afin de produire de l'hydrogène,
- hydrotraitement et/ou craquage catalytique et/ou viscoréduction de ladite fraction organique lourde.

La totalité de l'huile de pyrolyse est ainsi valorisée, permettant la production d'hydrogène et de bases carburants du type GPL (Gaz de pétrole liquéfié), essence, kérosène, gazole, gazole sous-vide...

L'éventuelle hydrodésoxygénation (dite HDO) de l'huile de pyrolyse, puis le pré-réformage de la fraction aqueuse obtenue permet de produire de l'hydrogène. Les problèmes de cokage observés lors d'un vaporéformage direct de l'huile de pyrolyse ou de la fraction aqueuse de l'huile de pyrolyse sont ainsi supprimés. En effet, la mise en oeuvre du procédé selon l'invention, et en particulier le procédé dont la 1$^{ère}$ étape est un traitement d'hydrodésoxygénation d'huile de pyrolyse, conduit à la formation d'une phase dite « aqueuse » dont la composition est telle que l'étape de pré-réformage ultérieure ne conduit pas à la formation de coke. La composition de cette phase aqueuse est donc totalement différente de la phase aqueuse évoquée ci-dessus, dans l'état de la technique, et obtenue par séparation de phase après ajout d'eau à l'huile de pyrolyse.

La phase aqueuse obtenue après HDO de l'huile de pyrolyse contient en général moins de produits lourds et de soufre (poison des catalyseurs de vaporéformage éliminé sous forme d'$H_2S$ lors de l'HDO), que la fraction aqueuse obtenue par une séparation de phase après ajout d'eau à l'huile de pyrolyse.

Le pré-réformage va permettre de transformer les composés en C2+ en $CH_4$, CO, $CO_2$ et $H_2$ en présence d'un catalyseur conventionnel de pré-réformage, en particulier un catalyseur conventionnel de pré-réformeur de GPL/naphtha, par exemple de type Ni ou NiO. Cette réaction peut par exemple être réalisée dans un lit fixe conventionnel.

L'effluent sortant du pré-réformeur est alors envoyé dans une unité SMR conventionnelle (« Steam Methane Reforming » qui signifie « réformage du méthane à la vapeur ») en ajoutant de la vapeur d'eau pour produire $H_2$. Cette réaction est en général réalisée au sein de nombreux tubes remplis de catalyseur disposés dans un four.

Les réactions simplifiées se produisant dans le pré-réformeur peuvent être schématisées par les équations

suivantes :

$$C_xH_yO_z + (x-z)\,H_2O \leftrightarrow (x+y/2-z)\,H_2 + xCO \quad (1)$$

$$CO + 3H_2 \leftrightarrow CH_4 + H_2O \qquad (2)$$

$$CO + H_2O \leftrightarrow CO_2 + H_2 \qquad (3)$$

Bilan :

$$C_xH_yO_z + (x-y/4-z/2)\,H_2O \leftrightarrow (x/2+y/8-z/4)\,CH_4 + (x/2-y/8+z/4)\,CO_2 \quad (4)$$

La réaction se produisant au niveau du SMR peut être schématisée par l'équation suivante :

$$CH_4 + H_2O \leftrightarrow CO + 3H_2.$$

Avantageusement, l'hydrogène produit à partir de la fraction aqueuse légère peut être utilisé pour l'hydrodésoxygénation de l'huile de pyrolyse et/ou pour l'hydrotraitement de la fraction organique lourde.

L'apport extérieur d'hydrogène nécessaire aux réactions d'hydrodésoxygénation (HDO) ou d'hydrotraitement (HDT) est ainsi considérablement réduit, et peut éventuellement être supprimé en cours de fonctionnement de l'installation selon la composition et la quantité de fraction aqueuse.

Par exemple, avec une fraction aqueuse légère contenant 50% d'eau et 50% de composés organiques, la quantité de $H_2$ produit suffit pour couvrir les besoins en $H_2$ de l'HDO de l'huile de pyrolyse. Un apport extérieur de $H_2$ n'est alors nécessaire qu'au démarrage de l'installation, avant le début de production de $H_2$.

L'efflizent obtenu lors de l'hydrotraitement de la fraction organique lourde peut également être séparé en une fraction aqueuse légère et une fraction organique lourde lorsque la quantité de fraction aqueuse est suffisamment importante pour pouvoir être séparée, cette fraction aqueuse légère étant alors envoyée au pré-réformage avec la fraction aqueuse légère issue de l'hydrodésoxygénation de l'huile de pyrolyse.

La production d'hydrogène peut alors être augmentée.

La phase organique lourde issue de la première HDO peut nécessiter un autre hydrotraitement (par exemple HDO) afin de produire des bases carburant.

Par ailleurs, comme contrairement à une phase organique obtenue par séparation par ajout d'eau dans de l'huile de pyrolyse, cette phase organique est miscible avec des hydrocarbures, elle peut donc être avantageusement co-traitée avec une charge fossile.

Préférentiellement, la phase organique issue de l'HDO de l'huile de pyrolyse représentera jusqu'à 30% en masse de la charge de l'unité d'hydrotraitement. Avantageusement, le co-traitement avec la charge d'origine fossile se fera après un fractionnement de l'effluent phase organique en sortie de l'unité d'hydrodésoxygénation de l'huile de pyrolyse.

Par exemple, après fractionnement, la coupe de type gazole issue de l'HDO de l'huile de pyrolyse peut être co-traitée dans une unité d'hydrotraitement conventionnelle avec une charge de type gazole d'origine fossile. La charge de type gazole d'origine fossile peut être issue de la distillation atmosphérique du pétrole brut (Gasoil straight run), d'une distillation sous vide du résidu atmosphérique (vacuum gas oil) ou une charge de type gazole issue d'un procédé de conversion. Le fait de pouvoir utiliser une unité existante pour le deuxième hydrotraitement permet de réduire considérablement les coûts.

De même, après fractionnement, la coupe de type kérosène ou essence issue de l'HDO de l'huile de pyrolyse peut être, si nécessaire, co-traitée dans une unité d'hydrotraitement conventionnelle avec une charge de type kérosène ou essence d'origine fossile.

Avantageusement, la phase aqueuse légère issue de l'hydrodésoxygénation de l'huile de pyrolyse contient des produits hydrocarbonés contenant au plus 6 ou 7 atomes de carbone, ce qui permet de transformer de manière quasi-totale les hydrocarbures en méthane et $CO_2$ lors du pré-réformage qui est mené à des températures très inférieures à celles utilisées pour le vaporéformage de méthane. Ainsi, on ne forme pas de coke au cours de cette étape ultérieure.

L'HDO de l'huile de pyrolyse pourra être réalisée à une température de 150 à 350°C et une pression de 100 à 200 bars.

L'HDO de l'huile de pyrolyse peut être réalisée dans un ou deux réacteurs en série. Dans ce dernier cas, le premier réacteur fonctionne à une température de 120 à 180°C, préférentiellement à 150°C, le second fonctionnant à une température plus élevée de 300 à 400°C, préférentiellement à 350°C.

L'hydrodésoxygénation de l'huile de pyrolyse est réalisée sous une pression de 100 à 200 bars. L'utilisation de pressions élevées permet de favoriser la réaction d'HDO et d'éviter au maximum la formation de coke sur les catalyseurs d'hydrotraitement ainsi que de diminuer la vitesse des réactions de polymérisation de l'huile de pyrolyse par rapport aux réactions d'HDO.

Le pré-réformage est réalisé à une température de 225 à 450 °C, sous une pression de 1 à 30 bars (l'utilisation de pressions élevées n'est pas favorable d'un point de vue thermodynamique mais permet de diminuer le volume des réacteurs et ainsi de limiter les coûts d'investissement). La gamme de température considérée permet de se placer dans un domaine thermodynamique favorable et d'éviter les réactions qui conduisent à la formation de coke. Le réacteur considéré peut être du type lit fluidisé ou lit fixe, préférentiellement de type lit fixe.

Le pré-réformage sera de préférence réalisé avec un rapport molaire eau/charge HC élevé, de 10 à 15. Ce rapport est plus élevé que ce qu'exige la thermodynamique de la réaction (environ 3 à 4). De ce fait, il permet à la fois de déplacer l'équilibre de la réaction vers la production de méthane et d'hydrogène et également de limiter la formation de coke. Ainsi, en fonction du ratio eau/organiques de la fraction aqueuse légère arrivant en charge du pré-réformeur, de l'eau sera ajoutée afin d'obtenir un ratio eau/composé oxygéné qui sera préférentiellement voisin de 13.

Le vaporéformage (unité SMR 28) peut être réalisé à une température de 600-900°C, sous une pression de 1 à 30 bars (l'utilisation de pressions élevées n'est en général pas favorable d'un point de vue thermodynamique mais permet de diminuer le volume des réacteurs et ainsi de limiter les coûts d'investissement). Le vaporéformage sera de préférence réalisé avec un rapport molaire eau/charge HC de 3 à 4. Typiquement, le vaporéformage peut être réalisé dans de nombreux petits tubes (plusieurs centaines) remplis de catalyseurs.

On pourra, également prévoir une étape de conversion catalytique du CO résiduel, éventuellement suivie d'une étape de purification de l'hydrogène, après l'étape de traitement de l'effluent dans l'unité SMR.

L'étape de conversion catalytique du CO résiduel est obtenue par déplacement (Water Gas Shift) de l'équilibre suivant en faveur de la formation de $CO_2$ :

$$CO + H_2O = CO_2 + H_2.$$

Ce déplacement est favorisé à basse température et avec un ratio eau/C élevé.

La purification de l'hydrogène est par exemple réalisée par le procédé PSA (de l'Anglais « Pressure Swing Absorber ») basé sur l'absorption des impuretés sur tamis moléculaires.

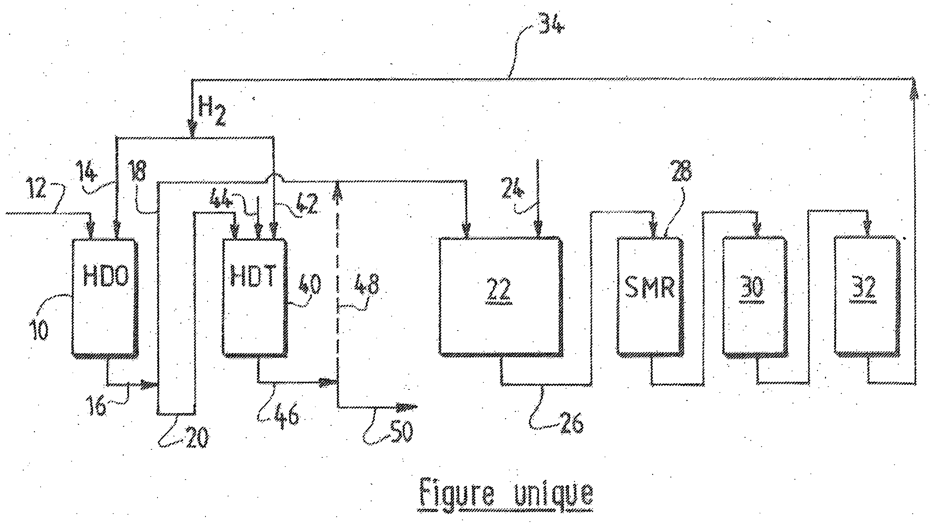

L'invention est maintenant décrite en référence au dessin annexé et aux exemples, non limitatifs.

La figure unique représente un schéma d'une installation permettant la mise en oeuvre du procédé selon l'invention.

L'installation comprend une unité d'hydrodésoxygénation (HDO) 10. Cette unité HDO 10 est alimentée en charge à traiter 12, l'huile de pyrolyse, et en hydrogène 14.

L'effluent 16 sortant de l'unité HDO 10 est séparée en une fraction aqueuse légère 18 et une fraction organique lourde 20.

La fraction aqueuse légère 18 est ensuite amenée en charge d'un pré-réformeur 22 lequel est alimenté en vapeur d'eau 24.

L'effluent 26 sortant du pré-réformeur 22 est ensuite envoyé dans une unité SMR 28 afin de produire de l'hydrogène.

Le CO résiduel contenu dans l'hydrogène peut être converti dans une unité 30 « water gas shift » puis l'hydrogène purifié dans une unité PSA 32, afin d'obtenir de l'hydrogène purifié 34.

La fraction organique lourde 20 est quant à elle envoyée en charge d'une unité d'hydrotraitement (HDT) 40.

On peut prévoir de fractionner cette fraction organique lourde 20 avant son envoi à l'unité HDT 40, l'une des coupes obtenues, par exemple la coupe gazole, étant renvoyée à l'HDT.

Cette unité HDT 40 est alimentée en $H_2$ 42 et éventuellement en charge de type gazole 44 laquelle peut être issue d'une distillation atmosphérique d'un pétrole brut (Gasoil straight run), d'une distillation sous vide du résidu atmosphérique (vacuum gas oil) ou une charge de type gazole issue d'un procédé de conversion. L'effluent 46 obtenu en sortie de l'HDT 40 peut servir de basés carburants du type GPL (Gaz de pétrole liquéfié), essence, kérosène, gazole, gazole sous-vide...

L'effluent 46 peut également se présenter sous la forme de deux phases dont une fraction aqueuse légère 48 et une fraction organique lourde 50. La fraction aqueuse légère 48 pourra alors être envoyée en charge du pré-réformeur 22 selon les besoins. La fraction organique lourde 50 sert quant à elle de carburant.

L'hydrogène obtenu 34 peut alors être utilisé en raffinerie, mais sera de préférence utilisé pour alimenter l'unité HDO 10 et/ou l'unité HDT 40.

Le procédé selon l'invention présente ainsi l'avantage de pouvoir être mis en oeuvre dans une installation existante dans laquelle seule une unité d'HDO et un pré-réformeur auront été rajoutés. Les unités 26 (SMR), 28 et 30 (PSA) peuvent en effet faire partie d'une installation de production de $H_2$ existante, tandis que l'unité HDT fait partie d'un schéma de raffinerie classique.

### *Exemple*

On considère une installation telle que décrite en préférence à la figure unique. L'unité HDO 10, le pré-réformeur 22 et l'unité SMR 28 fonctionnent dans les conditions suivantes :

**HDO** :

Température : 150-350°C
Pression : 150 Bars

**Pré-réformeur** :

Température Entrée : 250-450°C.
Pression : 30 bars
GHSV : 1000 $h^{-1}$
S/C (molaire) : 13

**Vaporéformage** :

Température Entrée dans le tube : 580-620°C
Température Sortie dans le tube : 850-870°C
Pression : 30 bars
S/C (molaire) : 3 à 4

Les caractéristiques de l'huile de pyrolyse utilisée sont présentées dans le tableau 3 ci-après.

Tableau 3

| Huile de pyrolyse ex-bois (résineux) | |
|---|---|
| Teneur en eau (% m/m) | 21,7 |
| Teneur en solides (% m/m) | 0,17 |
| Viscosité cinématique à 50°C (cst) | 17,1 |
| Teneur en cendres (% m/m) | 0,015 |
| Carbone Conradson (% m/m) | 19,9 |
| Masse volumique (kg/$m^3$) | 1227 |
| PCS (MJ/kg) | 18,2 |
| Teneur en carbone (% m/m) | 46,1 |
| Teneur en hydrogène (% m/m) | 7,4 |
| Teneur en oxygène (% m/m) | 46,5 |

Le débit de la charge huile de pyrolyse en entrée est de 307kT/an. Avec cette huile de pyrolyse de biomasse de type bois, contenant 25% (masse) d'eau et 75% (masse) de composés organiques et dans ces conditions, les débits massiques observés en fraction organique et fraction aqueuse en sortie de l'HDO sont les suivants :

138 kT/an de fraction organique lourde, soit un rendement massique d'environ 45%.
169 kT/an de fraction aqueuse légère, soit un rendement massique d'environ 55%.

La composition de la fraction aqueuse légère est d'environ 50% d'eau et d'environ 50 % de produits organiques, tandis que la composition de la fraction organique lourde est d'environ 1% d'eau et 99% de produits organiques (% massique).

L'effluent sortant de l'HDT aboutit à 115 kT/an de bases carburant, soit 83,3% en rendement massique, et 23 kT/an d'une fraction aqueuse légère, soit 16,7% en rendement massique.

Le rendement massique d'hydrogène sortant de l'unité PSA par masse d'huile de pyrolyse traitée est d'environ 16%. Cet hydrogène est donc issu du traitement par pré-réformage d'une charge de 192 kT/an d'une fraction aqueuse légère obtenue par les deux étapes d'hydrodésoxygénation et d'hydrotraitement. La consommation d'hydrogène par l'HDO et l'HDT étant d'environ 5% massique par masse de charge entrant dans HDO + HDT, le procédé mis en oeuvre selon l'invention est auto-suffisant en hydrogène, et ne nécessite donc pas d'apport extérieur en hydrogène.

## Revendications

1.   Procédé de valorisation d'huile de pyrolyse comprenant les étapes suivantes :

• pré-réformage de la fraction aqueuse légère,
soit issue de la séparation de l'huile de pyrolyse en une fraction aqueuse et une fraction riche en lignine,
soit obtenue après un traitement d'hydrodésoxygénation de l'huile de pyrolyse puis séparation de l'effluent obtenu en une fraction aqueuse légère et une fraction organique lourde,
ce pré-réformage étant réalisé à une température de 225 à 450 °C, sous une pression de 1 à 30 bars,
• traitement de ladite fraction aqueuse pré-réformée dans une unité SMR afin de produire de l'hydrogène ;
• hydrotraitement et/ou craquage catalytique et/ou viscoréduction de ladite fraction riche en lignine ou de la fraction organique lourde.

2.   Procédé de valorisation d'huile de pyrolyse selon la revendication 1 comprenant les étapes suivantes :

- traitement d'hydrodésoxygénation (10) de l'huile de pyrolyse (12) et séparation de l'effluent (16) obtenu en une fraction aqueuse légère (18) et une fraction organique lourde (20),
- pré-réformage (22) de ladite fraction aqueuse légère (18) à une température de 225 à 450°C, sous une pression de 1 à 30 bars et traitement de l'effluent (26) obtenu dans une unité SMR (28) afin de produire de l'hydrogène (34),
- hydrotraitement et/ou craquage catalytique et/ou viscoréduction (40) de ladite fraction organique lourde (20) ou de la fraction riche en lignine.

3.   Procédé de valorisation selon la revendication 1 ou 2, dans lequel l'hydrogène (34) produit à partir de la fraction aqueuse légère (18) est utilisé pour l'hydrotraitement (40) et/ou craquage catalytique de la fraction organique lourde (20) ou de la fraction riche en lignine et/ou pour l'hydrodésoxygénation (10) de l'huile de pyrolyse (12).

4.   Procédé de valorisation selon l'une des revendications 2 ou 3, dans lequel l'effluent (46) obtenu lors de l'hydrotraitement (40) de la fraction organique lourde (20) est séparé en une fraction aqueuse légère (48) et une fraction organique lourde (50) lorsque la quantité de fraction aqueuse est suffisamment importante pour pouvoir être séparée, cette fraction aqueuse légère (48) étant envoyée au pré-réformage (22) avec la fraction aqueuse légère (18) issue de l'hydrodésoxygénation (10) de l'huile de pyrolyse.

5.   Procédé de valorisation selon l'une des revendications 2 à 4, dans lequel la phase organique lourde (20) issue de l'hydrodésoxygénation (10) de l'huile de pyrolyse est fractionnée avant l'étape d'hydrotraitement (40).

6.   Procédé de valorisation selon l'une des revendications 2 à 5, dans lequel, au cours de l'étape d'hydrotraitement, la phase organique lourde (20) issue de l'hydrodésoxygénation (10) de l'huile de pyrolyse, ou la coupe gazole issue du fractionnement de la phase organique lourde (20) issue de l'hydrodésoxygénation (10) de l'huile de pyrolyse, est co-traitée avec une charge de type gazole (44), issue d'une distillation atmosphérique d'un pétrole brut (Gasoil straight run), d'une distillation sous vide du résidu atmosphérique (vacuum gas oil) ou une charge de type gazole issue d'un procédé de conversion.

**7.** Procédé de valorisation selon l'une des revendications 2 à 6, dans lequel la phase aqueuse légère (18) issue de l'hydrodésoxygénation (10) de l'huile de pyrolyse contient des produits hydrocarbonés contenant au plus 6 ou 7 atomes de carbone.

**8.** Procédé de valorisation selon l'une des revendications 2 à 7, dans lequel l'hydrodésoxygénation de l'huile de pyrolyse est réalisée à une température de 150 à 350°C et une pression de 100 à 200 bars.

**9.** Procédé de valorisation selon l'une des revendications 2 à 8, dans lequel l'hydrodéoxygénation de l'huile de pyrolyse est réalisée dans deux réacteurs en série, le premier fonctionnant à une température de 120 à 180°C, préférentiellement à 150°C, le second fonctionnant à une température plus élevée de 300 à 400°C, préférentiellement à 350°C.

**10.** Procédé de valorisation selon l'une des revendications 1 à 9, dans lequel le pré-réformage est réalisé avec un rapport molaire eau/charge HC de 10 à 15, préférentiellement de 13.

**11.** Procédé selon l'une des revendications 1 à 10, dans lequel une étape de conversion catalytique du CO résiduel, éventuellement suivie d'une étape de purification de l'hydrogène, est effectuée après l'étape de traitement de l'effluent (26) dans l'unité SMR (28).

## Patentansprüche

**1.** Verfahren zur Aufwertung von Pyrolyseöl, umfassend die folgenden Schritte:

- Vorreformieren der leichten wässrigen Fraktion, entweder hervorgegangen aus der Trennung des Pyrolyseöls in eine wässrige Fraktion und eine ligninreiche Fraktion,
oder erhalten nach einer Hydrodesoxygenierungsbehandlung des Pyrolyseöls, gefolgt von einem Abtrennen des erhaltenen Stromes in eine leichte wässrige Fraktion und eine schwere organische Fraktion, wobei das Vorreformieren bei einer Temperatur von 225 bis 450°C bei einem Druck von 1 bis 30 bar durchgeführt wird,
- Behandeln der vorreformierten wässrigen Fraktion in einer SMR-Einheit zum Herstellen von Wasserstoff;
- Hydrotreating und/oder katalytisches Cracken und/oder Viskoreduktion der ligninreichen Fraktion oder der schweren organischen Fraktion.

**2.** Verfahren zur Aufwertung von Pyrolyseöl nach Anspruch 1, umfassend die folgenden Schritte:

- Hydrodesoxygenierungsbehandlung (10) des Pyrolyseöls (12) und Abtrennen des erhaltenen Stromes (16) in eine leichte wässrige Fraktion (18) und eine schwere organische Fraktion (20),
- Vorreformieren (22) der leichten wässrigen Fraktion (18) bei einer Temperatur von 225 bis 450°C bei einem Druck von 1 bis 30 bar und Behandeln des erhaltenen Stromes (26) in einer SMR-Einheit (28) zum Herstellen von Wasserstoff (34),
- Hydrotreating und/oder katalytisches Cracken und/oder Viskoreduktion (40) der schweren organischen Fraktion (20) oder der ligninreichen Fraktion.

**3.** Verfahren zur Aufwertung nach Anspruch 1 oder 2, worin der Wasserstoff (34), hergestellt ausgehend von der leichten wässrigen Fraktion (18), zum Hydrotreating (40) und/oder katalytischen Cracken der schweren organischen Fraktion (20) oder der ligninreichen Fraktion und/oder zur Hydrodesoxygenierung (10) des Pyrolyseöls (12) verwendet wird.

**4.** Verfahren zur Aufwertung nach einem der Ansprüche 2 oder 3, worin der Strom (46), erhalten aus dem Hydrotreating (40) der schweren organischen Fraktion (20), in eine leichte wässrige Fraktion (48) und eine schwere organische Fraktion (50) aufgetrennt wird, wobei die Menge der wässrigen Fraktion ausreichend groß ist, um abgetrennt werden zu können, wobei die leichte wässrige Fraktion (48) dem Vorreformieren (22) mit der leichten wässrigen Fraktion (18), hervorgegangen aus der Hydrodesoxygenierung (10) des Pyrolyseöls, zugeführt wird.

**5.** Verfahren zur Aufwertung nach einem der Ansprüche 2 bis 4, worin die schwere organische Phase (20), hervorgegangen aus der Hydrodesoxygenierung (10) des Pyrolyseöls, vor dem Schritt des Hydrotreatings (40) fraktioniert wird.

**6.** Verfahren zur Aufwertung nach einem der Ansprüche 2 bis 5, worin während des Schrittes des Hydrotreatings die schwere organische Phase (20), hervorgegangen aus der Hydrodesoxygenierung (10) des Pyrolyseöls, oder die Gasölfraktion, hervorgegangen aus der Fraktionierung der schweren organischen Phase (20), hervorgegangen aus der Hydrodesoxygenierung (10) des Pyrolyseöls, mit einer Charge des Gasöl-Typs (44), hervorgegangen aus einer atmosphärischen Destillation eines Rohöls (Gasoil straight run), aus einer Vakuumdestillation des atmosphärischen Rückstandes (vacuum gas oil), oder einer Charge des Gasöl-Typs, hervorgegangen aus einem Konversionsverfahren, einem Co-Treating unterzogen wird.

**7.** Verfahren zur Aufwertung nach einem der Ansprüche 2 bis 6, worin die leichte wässrige Phase (18), hervorgegangen aus der Hydrodesoxygenierung (10) des Pyrolyseöls, Kohlenwasserstoffprodukte, enthaltend höchstens 6 oder 7 Kohlenstoffatome, enthält.

**8.** Verfahren zur Aufwertung nach einem der Ansprüche 2 bis 7, worin die Hydrodesoxygenierung des Pyrolyseöls bei einer Temperatur von 150 bis 350°C und einem Druck von 100 bis 200 bar durchgeführt wird.

**9.** Verfahren zur Aufwertung nach einem der Ansprüche 2 bis 8, worin die Hydrodesoxygenierung des Pyrolyseöls in zwei in Serie gestalteten Reaktoren durchgeführt wird, wovon der erste bei einer Temperatur von 120 bis 180°C, vorzugsweise bis 150°C, betrieben wird, der zweite bei einer höheren Temperatur von 300 bis 400°C, vorzugsweise bis 350°C, betrieben wird.

**10.** Verfahren zur Aufwertung nach einem der Ansprüche 1 bis 9, worin das Vorreformieren bei einem Stoffmengenverhältnis Wasser/HC-Menge von 10 bis 15, vorzugsweise von 13, durchgeführt wird.

**11.** Verfahren nach einem der Ansprüche 1 bis 10, worin ein Schritt des katalytischen Umsetzens des restlichen COs, gegebenenfalls gefolgt von einem Schritt der Aufreinigung des Wasserstoffs, nach dem Schritt des Behandelns des Stromes (26) in der SMR-Einheit (28) durchgeführt wird.

**Claims**

**1.** A process for the upgrading of pyrolysis oil comprising the following stages:

  • prereforming the light aqueous fraction,
  either resulting from the separation of the pyrolysis oil into an aqueous fraction and a lignin-rich fraction,
  or obtained after a hydrodeoxygenation treatment of the pyrolysis oil, followed by separation of the effluent stream obtained into a light aqueous fraction and a heavy organic fraction,
  this prereforming being carried out at a temperature of 225 to 450°C, under a pressure of 1 to 30 bar,
  • treatment of said prereformed aqueous fraction in an SMR unit in order to produce hydrogen;
  • hydrotreating and/or catalytic cracking and/or viscobreaking of said lignin-rich fraction or of the heavy organic fraction.

**2.** The process for the upgrading of pyrolysis oil as claimed in claim 1, comprising the following stages:

  - hydrodeoxygenation treatment (10) of the pyrolysis oil (12) and separation of the effluent stream (16) obtained into a light aqueous fraction (18) and a heavy organic fraction (20),
  - prereforming (22) said light aqueous fraction (18) at a temperature of 225 to 450°C, under a pressure of 1 to 30 bar and treatment of the effluent stream (26) obtained in an SMR unit (28) in order to produce hydrogen (34),
  - hydrotreating and/or catalytic cracking and/or viscobreaking (40) of said heavy organic fraction (20) or of the lignin-rich fraction.

**3.** The upgrading process as claimed in claim 1 or 2, in which the hydrogen (34) produced from the light aqueous fraction (18) is used for the hydrotreating (40) and/or catalytic cracking of the heavy organic fraction (20) or of the lignin-rich fraction and/or for the hydrodeoxygenation (10) of the pyrolysis oil (12).

**4.** The upgrading process as claimed in either of claims 2 and 3, in which the effluent stream (46) obtained during the hydrotreating (40) of the heavy organic fraction (20) is separated into a light aqueous fraction (48) and a heavy organic fraction (50), when the amount of aqueous fraction is sufficiently high to be able to be separated, this light aqueous fraction (48) being sent to the prereforming (22) with the light aqueous fraction (18) resulting from the hydrodeoxygenation (10) of the pyrolysis oil.

5. The upgrading process as claimed in one of claims 2 to 4, in which the heavy organic phase (20) resulting from the hydrodeoxygenation (10) of the pyrolysis oil is fractionated before the hydrotreating stage (40).

6. The upgrading process as claimed in one of claims 2 to 5, in which, during the hydrotreating stage, the heavy organic phase (20) resulting from the hydrodeoxygenation (10) of the pyrolysis oil, or the gas oil fraction resulting from the fractionation of the heavy organic phase (20) resulting from the hydrodeoxygenation (10) of the pyrolysis oil, is cotreated with a feedstock of the type consisting of gas oil (44) resulting from an atmospheric distillation of crude oil (gas oil straight run) or from a vacuum distillation of the atmospheric residue (vacuum gas oil) or a feedstock of the type consisting of gas oil resulting from a conversion process.

7. The upgrading process as claimed in one of claims 2 to 6, in which the light aqueous phase (18) resulting from the hydrodeoxygenation (10) of the pyrolysis oil comprises hydrocarbon products comprising at most 6 or 7 carbon atoms.

8. The upgrading process as claimed in one of claims 2 to 7, in which the hydrodeoxygenation of the pyrolysis oil is carried out at a temperature of 150 to 350°C and a pressure of 100 to 200 bar.

9. The upgrading process as claimed in one of claims 2 to 8, in which the hydrodeoxygenation of the pyrolysis oil is carried out in two reactors in series, the first operating at a temperature of 120 to 180°C, preferably at 150°C, and the second operating at a higher temperature of 300 to 400°C, preferably at 350°C.

10. The upgrading process as claimed in one of claims 1 to 9, in which the prereforming is carried out with a water/HC feedstock molar ratio of 10 to 15, preferably of 13.

11. The process as claimed in one of claims 1 to 10, in which a stage of catalytic conversion of the residual CO, optionally followed by a stage of purification of the hydrogen, is carried out after the stage of treatment of the effluent stream (26) in the SMR unit (28).

Figure unique

## RÉFÉRENCES CITÉES DANS LA DESCRIPTION

*Cette liste de références citées par le demandeur vise uniquement à aider le lecteur et ne fait pas partie du document de brevet européen. Même si le plus grand soin a été accordé à sa conception, des erreurs ou des omissions ne peuvent être exclues et l'OEB décline toute responsabilité à cet égard.*

**Documents brevets cités dans la description**

- US 20080053870 A

**Littérature non-brevet citée dans la description**

- **CZERNIK S ; FRENCH R ; FEIK C ; CHORNET E.** Hydrogen by catalytic steàm reforming of liquid by-products from biomass thermoconversion processes. *Ind Eng Chem Res.,* 2002, (41), 4209-4215